# EUROPÄISCHE PATENTSCHRIFT

(11) **EP 1 623 213 B1**
(45) Veröffentlichungstag und Bekanntmachung des Hinweises auf die Patenterteilung: **17.11.2010**
(21) Anmeldenummer: 04730192.4
(22) Anmeldetag: 29.04.2004
(51) Int. Cl.: G01N 21/91

(54) **HANDLAMPE, INSBESONDERE FÜR DIE MAGNETISCHE RISSPRÜFUNG**
MANUAL LAMP, ESPECIALLY FOR MAGNETIC CRACK TESTING
LAMPE MANUELLE, EN PARTICULIER POUR LA DETECTION MAGNETIQUE DE FISSURES

(30) Priorität: 30.04.2003 DE 20306789 U
(43) Veröffentlichungstag der Anmeldung: 08.02.2006
(73) Patentinhaber: Illinois Tool Works Inc., Glenview, IL 60026 (US)
(72) Erfinder: ANNIGHÖFER, Rolf, 73463 Westhausen (DE); TOMASCHKO, Sigmar, 73431 Aalen (DE); VETTERLEIN, Thomas, 63069 Offenbach (DE)
(74) Vertreter: Vetter, Ewald Otto
(86) Internationale Anmeldenummer: PCT/DE2004/000891
(87) Internationale Veröffentlichungsnummer: WO 2004/097385

(56) Entgegenhaltungen:
- WO-A-03/060495
- WO-A2-00/67048
- WO-A2-00/67048
- US-A1- 2002 093 649
- US-B1- 6 177 678

## Beschreibung

Die Erfindung betrifft ein Handlampe insbesondere für die magnetische Rißprüfung und nach dem Farbeindringverfahren.

Handlampen für die Rissprüfung an sich sind bekannt. Sie dienen dazu, bei der Fehlererkennung in der optischen Rissprüfung nach dem Farbeindringverfahren und magnetische Rissprüfung die Anreicherung von fluoreszenzfähigen Partikeln in Rissen in höherer Konzentration Farbstoffpartikel durch Fluoreszenz derselben sichtbar zu machen und so Risse zu ermitteln. Eine Vorrichtung mit wenigstens einer LED, welche Strahlung im Bereich des nahen ultraviolett bzw. im ultravioletten Bereich imitieren kann, um ein lumineszentes Material anzuregen ist aus der US 2002/0093649 A1 bekannt. Weiterhin ist aus der WO 2000/67048 A2 eine optische Vorrichtung mit einer Lichtquelle bekannt, welche beim Bleichen von Zähnen zum Einsatz kommt. Aus der nachveröffentlichten Druckschrift WO 2003/060495 A1 ist letztendlich eine LED-Prüflampe mit einer Vielzahl von LEDs zur Emission elektromagnetischer Strahlung mit verschiedenen Wellenlängen-Spitzen bekannt. Zum technischen Hintergrund wird die DE 196 39020.6 genannt, in der ein gattungsgemäßes Farbeindringverfahren erläutert Ist, wobei die Anwendung der erfindungsgemäßen Handlampe keineswegs auf diese Anwendung beschränkt ist. Typische Anwendungsfälle von Handlampen sind insbesondere die Prüfung von schlecht zugänglichen Hohlräumen, wie Rohrinnenwänden; Flächen, die im Auflicht nicht beleuchtet werden - generell Bereiche, die schlecht erreichbar sind oder eine schnelle Überprüfung von Teilen vor Ort. Bisher wurden UV-Handiampen eingesetzt, in denen ein UV-Brenner die notwendige UV-Strahlung - ggf. unter Vorschalten eines Filters - emittierte. Diese UV-Brenner hatten leider keine lange Lebensdauer.

Ferner sank das Emissionsspektrum innerhalb kurze Zeit auf Bereiche längerer Wellenlängen ab, was dazu führte, dass diese Lampen der Aufgabe, in einem bestimmten UV-Bereich Fluoreszenz anzuregen, nicht mehr in ausreichendem Mass nachkamen. Ferner waren die bekannten UV-Quellen unhandlich und hatten grosse Abmasse - was auch häufig durch das notwendige Vorschalten einer Vorschaltdrossel bei Leuchtstoffröhren verursacht war. Dazu kam noch ein relativ hohes Gewicht, was die feinmotorische Handhabung ebenfalls erschwerte.

Es handelt sich also hier um eine Handlampe, in der in an sich bekannter Welse Werkstücke für die Farbeindringprüfung mit Farbstoffe aufweisendem Prüfmittel unter Anreicherung der Farbstoffe an Oberflächenfehlem behandelt und unter Beleuchtung durch eine Beleuchtungseinrichtung, wie UV-Lampen bei Fluoreszenzfarbstoffen, aber auch Lasern oder anderen Lampen bei entsprechend absorbierenden Farbstoffen, bewertet werden.

Es werden dabei in an sich bekannter Weise Werkstücke für die Farbeindringprüfung vorbereitet, indem sie gereinigt, ggf. gebeizt und getrocknet werden, mit einem Farbstoffe, insbesondere auch Fluoreszenzfarbstoffe, aufweisenden Prüfmittel unter Anreicherung der Farbstoffe an Oberflächenfehlern, Insbesondere Riscan, besprüht, sodann vom überschüssigen farbstoffhaltigen Prüfmittel, bspw. durch Abstreifen oder Abwischen befreit, das so behandelte Werkstück ggf. mit einem Entwickler behandelt und sodann nach einer vorherbestimmten Entwicklungszeit unter UV- Licht betrachtet und ausgewertet wird.

Die Farbeindring-Untersuchungen und Magnetpulverprüfungen können von Bedienungspersonal durchgeführt und durch Augenschein ausgewertet werden - es ist aber auch möglich, diese durch spezielle optische Verfahren automatisch auszuwerten. Die Anmelderin hat bereits derartige Verfahren zur Farbeindringprüfung vorgeschlagen, nebst zugehöriger Vorrichtung.

Dementsprechend liegt der Erfindung die Aufgabe zugrunde, die Nachteile von im UV-Bereich emittierenden Handlampen insbesondere für das Farbeindringverfahren und das Magnetpulverprüfverfahren zu vermeiden.

Diese Aufgabe wird erfindungsgemäß durch eine Handlampe, insbesondere für die magnetische Rissprüfung, mit den Merkmalen des Patentanspruchs 1 gelöst, die mindestens eine LED mit einer Emissionswellenlänge im Bereich des UVA als Leuchtmittel aufweist. Vorteilhafte Weiterbildungen ergeben sich aus den abhängigen Ansprüchen.

Die Lichterzeugung in der LED-Handlampe erfolgt im LED direkt durch Bahnwechsel von Elektronen in einem Halbleiterkristall. Aufgrund dieser Tatsache entsteht nur Lichtstrahlung in dem Wellenlängenbereich, welche der beim Bahnwechsel der Elektronen emittierten Quanten entspricht. Im Gegensatz dazu emittieren thermische Strahler, wie herkömmliche UV-Lampen, kontinuierlich in einem sehr breiten Spektrumsbereich, der für die Rissprüfung unnötig bzw, schädlich ist und bei den bekannten UV-Lampen ausgefiltert werden muss. Insbesondere die bei klassischen UV-Lampen auftretende gesundheitsgefährdende UVB und UVC-Strahlung kann durch die erfindungsgemässen LED als Leuchtmittel ausgeschlossen werden. Das Entstehen schädlicher Strahlung im kurzwelligen UV-Bereich, die schädlich für den Augenhintergrund und gefährlich für die Haut des Betreibers ist, da diese Strahlung "Sonnenbrand" bzw. Strahlungsschäden bewirkt, ist somit ausgeschlossen.

Dadurch, dass nun spezifisch nur in einem Wellenlängenberelch emittierende LEDs eingesetzt werden, wird auch erheblich weniger Energie zur Herstellung der Lichtquanten der für die Prüfung erforderlichen Wellenlängen benötigt und die Erwärmung der Lampe vermieden. Ein weitere Vorteil von LEDs ist ihre Langlebigkeit - im Gegensatz zu herkömmlichen UV-Strahlern beträgt diese ein Vielfaches.

Die LED weisen keine Alterung des Emissionsspektrums - im Gegensatz zu den thermischen Leuchtmitteln auf wodurch eine gleichmässige Qualität der Rissprüfung ermöglicht wird. LEDs benötigen keine Aufwärmphase, d.h. dass die Emission weitgehendst konstant ist - im Gegensatz zu den herkömmlichen Handlampen für diesen Bereich.
Sie benötigen auch keine Aufwärmphase, sodass das volle Spektrum sogleich nach Anschalten der Lampe zur Verfügung steht - im Gegensatz zu thermischen UV-Lampen, die erst eine stabile Betriebstemperatur zum Aufbau eines stabilen Spektrums benötigen.

Da LEDs erheblich weniger Energie benötigen als andere Leuchtmittel, kann die erfindungsgemäße Handlampe auch eine transportable Energiequelle, wie eine Batterie, einen Akkumulator, eine Speicherzelle aufweisen und somit unabhängig vom Vorliegen einer Stromquelle - wie bei der Überprüfung von Werkstücken auf Baustellen etc. eingesetzt werden. Gleichspannung von 12 oder 24 V ist völlig ausreichend für den Betrieb. Diese liegt im Bereich der sog. Schutzkleinspannung, was für den Betrieb in feuchter Umgebung und bei Spritzwasser sowie in Behältern wichtig ist. Auch eine Energieversorgung mit einer Autobatterie in sehr unzugänglichen Gegenden - bspw. bei der Prüfung von Pipelines - ist möglich.

Ein weiterer Vorteil der LED ist ihre lange Lebensdauer, die herkömmliche UV-Lampen weit übertrifft. Die Lebensdauer der LED beträgt mehr als 50.000 Stunden, d.h. mehr als 5 Jahre ununterbrochenen Dauerbetriebs ( die Lebensdauer einer LED ist als Abfall der Lichtintensität auf 50% bei der Nennleistung definiert). Schliesslich sind LED nicht so erschütterungsempfindlich wie Gasentladungslampen, die bei Schlägen auf das Gehäuse oder Fallenlassen der Lampe leicht zerbrechen, während LED gegenüber diesen Einwirkungen relativ unempfindlich sind.

Es ist besonders bevorzugt, dass die Handlampe zusätzlich zur LED mindestens ein weiteres Leuchtmittel aufweist, das im 400 - 800 nm- Bereich emittiert, wobei beide Leuchtmittel getrennt voneinander an- und abschaltbar sind. Dadurch hat der Betreiber eine Positionierungslampe vorliegen, die ihm die Richtung der für das menschliche Auge unsichtbaren UVA-Strahlung ermöglicht. Dieses Leuchtmittel kann bevorzugt ebenfalls ein wenig Energie verbrauchendes sein, wie eine weitere, im Sichtbaren emittierende LED oder ein LASER.

Das weiteren kann die Handlampe auch eine Weisslichtlampe aufweisen, die dem Betreiber eine allgemeine Besichtigung des Prüffeldes ermöglicht.

Typische Außenmasse einer erfindungsgemäßen Handlampe sind etwa 100 x 100 x 140 mm (ohne Handgriff) und ihr Gewicht liegt um 1 kg.

Aufgrund der Tatsache, dass die LEDs nur niedrige Betriebsspannungen benötigen, ist die Handlampe erheblich sicherer, als solche nach dem Stand der Technik, die aufwändigste Sicherungsmassnahmen für die bspw. beim Zünden einer Leuchtstoffröhre über die Drossel notwendige Hochspannung abzusichern.

Es ist wichtig, die LED beim Betrieb thermisch zu stabilisieren - bei erhöhten Temperaturen nimmt die Intensität der LED ab. Demzufolge muss die Stromversorgung der LED so gesteuert sein, dass diese möglichst nicht am Leistungsmaximum läuft, sodass ein Warmwerden der LED vermieden werden kann. Die Intensität einer LED ist eine Funktion der Stromaufnahme, daher muss der Versorgungsstrom der LED so gesteuert sein, dass sie in einem mittleren Leistungsbereich laufen, um optimale Lichtausbeute zu erhalten. Ferner wird zur Vermeidung einer Überhitzung bevorzugt eine Kühleinrichtung vorgesehen, wie Lüftungsschlitze, Ventilatoren u. dgl.

Die Steuerung kann entweder ständige oder aber nur Notfall Anzeigen veranlassen, falls Überwachungseinrichtungen, wie Temperatursensor, UV-Sensor, Spannungsmesser Werte ausserhalb eines Normbereiches aufweisen.

Somit werden durch die erfindungsgemäße Handlampe unter anderem folgende Vorteile erzielt::
Vermeiden des Entstehens von UVB und UVC
Akkumulatorbetrieb bei Schutzkleinspannung
Sofortige Betriebsbereitschaft nach dem Anschalten
Geringe Ausmasse
Lange Leuchtmittellebensdauer - wenig Wartung
Mikroprozessorüberwachung
Erschütterungsunempfindlichkeit

Nachfolgend wird ein bevorzugtes Ausführungsbeispiel anhand der Zeichnung, auf die die Erfindung keineswegs eingeschränkt ist, näher erläutert. Dabei zeigt:

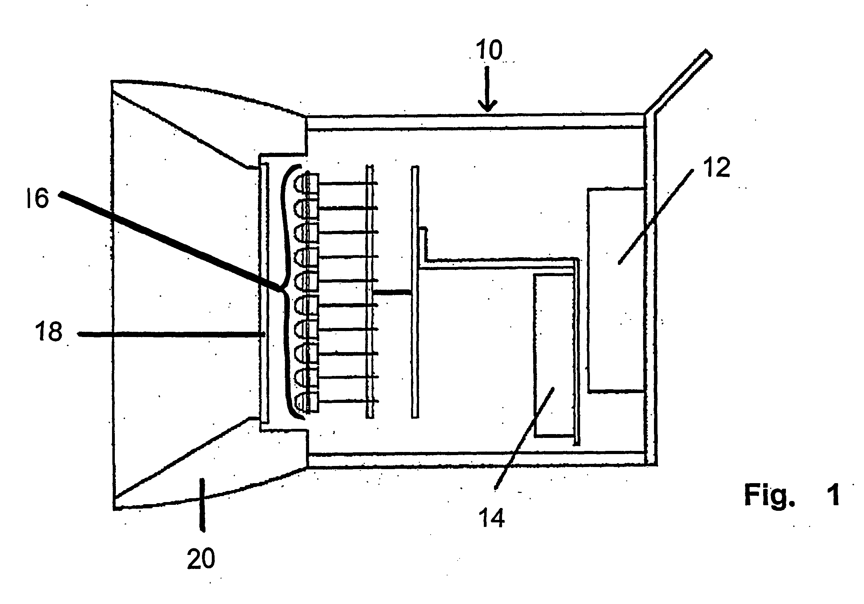

Fig.1 einen Querschnitt durch eine schematisch dargestellte Handlampe

Wie aus Fig. 1 ersichtlich, weist die Handlampe ein Gehäuse 10 mit einem Rippenkühlkörper 12 sowie einem Lüfter 14 auf. Beide dienen der Kühlung der LEDs 16, die in einem Strahlungsfeld angeordnet sind. Vor dem Strahlungsfeld befindet sich eine Schutzscheibe 18 sowie ein Scheibenrahmen, der die Scheibe schützt. Durch Betrieb des Lüfters wird kühle Luft aus dem Bereich des Rippenkühlkörpers in Richtung der LED und in der Lampe geführt und so Kühlung und Vermeidung einer lokalen Erwärmung erzielt.

Bevorzugt ist das Gehäuse spritzwassergeschützt, also dicht und erfüllt die Norm IP65. Die Lampe besitzt ferner eine Steuerung, wie einen Mikroprozessor, die über Temperaturfühler überwacht, ob eine Schwellentemperatur überschritten ist und demzufolge die Stromzufuhr zu den LED regelt. Dadurch kann sichergestellt werden, dass die Wärmegeneration stablilisiert werden kann. Ferner kann mindestens ein UV-Sensor vorgesehen sein, um die Emission der LED zu überprüfen, sowie eine allgemeine Spannungskontrolle. Die Signale dieser Messeinrichtungen werden von der Steuerung verarbeitet und ggf. Anzeigen, wie Warnlampen, Anzeigeinstrumente etc. angesteuert, wodurch der Betreiber gewarnt wird, falls ein Batterie/Akkumulatorversagen bevorsteht oder die Energieversorgung nicht ausreichend ist. Der Betreiber wird auch vor Überhitzung der Lampe oder aber vor Fehlern der UV-Quelle gewarnt.

Obwohl die Erfindung anhand bevorzugter Ausführungsformen erläutert wurde, sind dem Fachmann Abwandlungen derselben geläufig, die ebenfalls unter den Schutzumfang der Ansprüche fallen, sodaß die Erfindung keineswegs auf die Ausführungsbeispiele begrenzt ist.

## Patentansprüche

1. Handlampe, insbesondere für die optische Rissprüfung nach dem Magnetpulverprüf- und Farbeindringverfahren, welche mindestens eine LED (16) mit einer Emissionswellenlänge im Bereich des UVA als Leuchtmittel aufweist,
**dadurch gekennzeichnet, dass**
sie zusätzlich zur mindestens einen LED (16) mindestens ein weiteres Leuchmittel aufweist, das im 400 - 800 nm-Bereich emittiert, wobei beide Leuchtmittel getrennt voneinander an- und abschaltbar sind und das weitere Leuchtmittel Weißlicht aussendet.

2. Handlampe nach Anspruch 1, insbesondere für die optische Rissprüfung, **dadurch gekennzeichnet, dass** sie eine transportable Energiequelle, wie eine Batterie, einen Akkumulator, eine Speicherzelle aufweist.

3. Handlampe nach einem der vorangehenden Ansprüche, **dadurch gekennzeichnet, dass** ihre Außenmaße etwa 100 x 100 x 140 mm sind.

4. Handlampe nach einem der vorangehenden Ansprüche, **dadurch gekennzeichnet, dass** sie eine Steuerung aufweist, welche die Stromzuführung der LED (16) entsprechend vorgegebener Größen sowie von empfangenen Messsignalen, wie Temperatur, Intensität der Lampen, regelt.

5. Handlampe nach einem der vorangehenden Ansprüche, **dadurch gekennzeichnet, dass** sie Kühleinrichtungen (12, 14), wie Kühlbleche, Ventilatoren, Peltierelemente, aufweist.

6. Handlampe nach einem der vorangehenden Ansprüche, **dadurch gekennzeichnet, dass** sie Anzeigen für Funktionsstörungen, wie Anzeigelampen oder Anzeigeinstrumente aufweist.

7. Handlampe nach einem der vorangehenden Ansprüche, **dadurch gekennzeichnet, dass** das Gehäuse (10) spritzwassergeschützt ist.

8. Handlampe nach einem der vorangehenden Ansprüche, **dadurch gekennzeichnet, dass** sie etwa 1000 g wiegt.

## Claims

1. Hand-held lamp, in particular for optical crack testing using the magnetic powder test method and dye penetration method, which has at least one LED (16) with an emission wavelength in the region of the UVA as luminous means,
**characterized in that**
in addition to the at least one LED (16) it has at least one further luminous means, which emits in the 400-800 nm region, it being possible for the two luminous means to be switched on and off separately from one another, and the further luminous means outputting white light.

2. Hand-held lamp according to Claim 1, in particular for optical crack testing, **characterized in that** it has a transportable energy source such as a battery, a storage battery, a storage cell.

3. Hand-held lamp according to one of the preceding claims, **characterized in that** its external dimensions are approximately 100 × 100 × 140 mm.

4. Hand-held lamp according to one of the preceding claims, **characterized in that** it has a control which regulates the power supply of the LED (16) in accordance with prescribed variables as well as with received measuring signals such as temperature, intensity of the lamps.

5. Hand-held lamp according to one of the preceding claims, **characterized in that** it has cooling devices (12, 14) such as cooling plates, fans, Peltier elements.

6. Hand-held lamp according to one of the preceding claims, **characterized in that** it has indicators for malfunctions, such as indicating lamps or indicating instruments.

7. Hand-held lamp according to one of the preceding claims, **characterized in that** the housing (10) is splash-proof.

8. Hand-held lamp according to one of the preceding claims, **characterized in that** it weighs approximately 1000 g.

## Revendications

1. Lampe manuelle, en particulier pour la vérification visuelle des fissures par le procédé de test par poudre magnétique et pénétration d'encre, qui présente comme moyen d'éclairage au moins une LED (16) dont la longueur d'onde d'émission est dans la plage des UVA,
**caractérisée en ce que**
en plus d'au moins une LED (16), elle présente au moins un autre moyen d'éclairage qui émet dans la plage de 400 à 800 nm,
**en ce que** les deux moyens d'éclairage peuvent être branchés et débranchés séparément l'un de l'autre et
**en ce que** l'autre moyen d'éclairage émet de la lumière blanche.

2. Lampe manuelle selon la revendication 1, en particulier pour la vérification visuelle des fissures, **caractérisée en ce qu'**elle présente une source transportable d'énergie, par exemple une batterie, un accumulateur ou une cellule d'accumulation.

3. Lampe manuelle selon l'une des revendications précédentes, **caractérisée en ce que** ses dimensions extérieures sont d'environ 100 x 100 x 140 mm.

4. Lampe manuelle selon l'une des revendications précédentes, **caractérisée en ce qu'**elle présente une commande qui régule l'apport de courant au LED (16) en fonction de grandeurs prédéterminées ainsi que de signaux de mesure reçus, par exemple la température ou l'intensité des lampes.

5. Lampe manuelle selon l'une des revendications précédentes, **caractérisée en ce qu'**elle présente des dispositifs de refroidissement (12, 14), par exemple des tôles de refroidissement, des ventilateurs ou des éléments paltier.

6. Lampe manuelle selon l'une des revendications précédentes, **caractérisée en ce qu'**elle présente des affichages indiquant les perturbations de fonctionnement, par exemple des lampes témoin ou des instruments d'affichage.

7. Lampe manuelle selon l'une des revendications précédentes, **caractérisée en ce que** le boîtier (10) est protégé contre les projections d'eau.

8. Lampe manuelle selon l'une des revendications précédentes, **caractérisée en ce qu'**elle pèse environ 1 000 g.
